# EUROPEAN PATENT APPLICATION

(11) **EP 4 819 318 A1**
(43) Date of publication of application: **07.10.2026**
(21) Application number: 26168951.7
(22) Date of filing: 30.03.2026
(51) Int. Cl.: H01M 50/176, H01M 50/15, H01M 50/553, H01M 50/593, H01M 50/342, H01M 50/548, H01M 10/0525

(54) **LID ASSEMBLY AND LITHIUM-ION BATTERY**

(30) Priority: 03.04.2025 CN 202520622587 U
(71) Applicant: AESC Japan Ltd., Yokohama-shi, Kanagawa 220-0012 (JP)
(72) Inventor: SUN, Zhenbiao, Jiangyin City, Wuxi City, 214443 (CN); CAO, Shengrong, Jiangyin City, Wuxi City, 214443 (CN)
(74) Representative: Becker, Eberhard

(57) **Abstract**

A lid assembly (10) and a lithium-ion battery is provided. The lid assembly (10) includes a lid base (1), a lower insulating member (4) stacked with the lid base (1), and a terminal (5) and an explosion protection valve (6) disposed on the lid base (1). The terminal (5) penetrates the lower insulating member (4) and the lid base (1). A first protruding portion (11) corresponding to a position of the explosion protection valve (6) and a second protruding portion (7) are provided on the lower insulating member (4). The second protruding portion (7) includes a planar region (7-1) and a curved region (7-2). A minimum dimension of an orthogonal projection of the curved region (7-2) on the lid base (1) in a length direction is L1. A minimum distance between the planar region (7-1) and the terminal base plate (5-1) on the terminal (5) is L0, which satisfies 0.5≤L1/L0≤0.9.

## Description

### BACKGROUND

### Technical Field

The present disclosure relates to the field of battery technology, and particularly relates to a lid assembly and a lithium-ion battery.

### Related Art

A lithium-ion battery is a type of secondary battery that operates primarily through the migration of lithium ions between a positive electrode and a negative electrode. The operating principle of the lithium-ion battery is as follows: during charging, lithium ions are deintercalated from the positive electrode and, via the electrolyte, intercalated into the negative electrode, placing the negative electrode in a lithiated state; during discharging, the converse occurs, with lithium ions migrating from the negative electrode to the positive electrode, thereby releasing stored energy. The lithium-ion battery generally includes a housing and a lid assembly, with an electrode assembly disposed within the housing. The electrode assembly principally includes a main body and tabs connected thereto, and the lid assembly principally includes a rivet, a terminal, a lid base, an upper insulating member, and a lower insulating member, among other components. At present, in some lithium-ion batteries, the lid assembly may inflict compressive damage upon the electrode assembly; accordingly, there is an urgent need for a lithium-ion battery that prevents such damage.

### SUMMARY

In view of this, the purpose of the present disclosure is to provide a lid assembly and a lithium-ion battery to solve the related problems mentioned in the background art.

A first aspect of the present disclosure provides a lid assembly, including: a lid base, a lower insulating member stacked with the lid base, a terminal and an explosion protection valve disposed on the lid base. The terminal penetrates the lower insulating member and the lid base in sequence. A terminal base plate is provided on a side of the terminal away from the lid base. A first protruding portion and a second protruding portion are provided on a side of the lower insulating member away from the lid base. The first protruding portion corresponds to a position of the explosion protection valve. The second protruding portion is located at an end of the lower insulating member away from the first protruding portion. A surface of the second protruding portion away from the lid base includes a planar region and a curved region connected to each other. The curved region is disposed close to the terminal base plate. An orthogonal projection of the curved region on the lid base is a first projection. A minimum dimension of the first projection in a length direction of the lid assembly is L1. A minimum distance between the planar region and the terminal base plate is L0, which satisfies 0.5≤L1/L0≤0.9.

Further, a dimension of the first projection along the length direction of the lid assembly is 0.1mm to 2mm.

Further, a length of the lid assembly is 50mm to 150mm. A minimum spacing between the second protruding portion and the terminal base plate is greater than 0mm and less than or equal to 10mm.

Further, a partial region of the second protruding portion on a side close to the terminal base plate extends toward the terminal base plate to form a cantilever, and the curved region is formed on a side of the cantilever away from the lid base.

Further, a thickness of the cantilever is 0.1mm to 1mm.

Further, a transition portion is provided on a side of the cantilever close to the lid base.

Further, the transition portion and the curved region are both fillets. A fillet radius of the curved region is 0.7mm to 2mm. A fillet radius of the transition portion is equal to the fillet radius of the curved region minus the thickness of the cantilever.

Further, the second protruding portion is provided with one cantilever, and along a width direction of the lid assembly, a dimension of the cantilever is less than or equal to a dimension of the second protruding portion.

Further, the second protruding portion is connected with a plurality of the cantilevers, and the plurality of cantilevers are spaced apart along a width direction of the lid base.

Further, an opening slot is provided on a side of the second protruding portion close to the lid base, and a through hole is provided at a slot bottom of the opening slot away from the lid base.

Further, the through hole is spaced apart from the curved region.

A second aspect of the present disclosure provides a lithium-ion battery, including: a housing; the lid assembly described in the first aspect, wherein the lid assembly seals the housing; an electrode assembly disposed within the housing, wherein the electrode assembly includes a main body and a tab extending from the main body, the tab is connected to the terminal base plate; a minimum distance between the tab and the second protruding portion is greater than or equal to 1mm and less than or equal to 3mm.

From the above description, it can be seen that, regarding the lid assembly and lithium-ion battery provided by the present disclosure, the lid assembly includes: the lid base; the lower insulating member stacked with the lid base; the terminal and the explosion protection valve disposed on the lid base, wherein the terminal penetrates through the lower insulating member and the lid base in sequence, the terminal base plate is provided on a side of the terminal away from the lid base, the first protruding portion and the second protruding portion are provided on a side of the lower insulating member away from the lid base, the first protruding portion corresponds to the position of the explosion protection valve, the second protruding portion is located at an end of the lower insulating member away from the first protruding portion, a surface of the second protruding portion away from the lid base includes the planar region and the curved region connected to each other, the curved region is disposed close to the terminal base plate, the orthogonal projection of the curved region on the lid base is the first projection, the minimum dimension of the first projection in the length direction of the lid assembly is L1, and the minimum distance between the planar region and the terminal base plate is L0, which satisfies 0.5≤L1/L0≤0.9. By providing the planar region and curved region on the second protruding portion, a contact area between the second protruding portion and the electrode assembly may be increased, and the pressure on the contact surface may be reduced. Especially when the battery is under impact, vibration and other working conditions, crushing of the electrode assembly may be avoided. By limiting a proportional relationship of L1/L0, battery stability is ensured, avoiding the first projection occupying an excessive proportion, the spacing between the second protruding portion and the tabs being too close, and being subject to spatial interference. Also, it is possible to avoid the first projection occupying an insufficient proportion, the contact area between the second protruding portion and the electrode assembly being small, and still the electrode assembly might be easily crushed. The lithium-ion battery described herein is simple in structure and convenient to manufacture, and is capable of effectively preventing compressive damage to the electrode assembly, thereby ensuring the stability of the battery.

### BRIEF DESCRIPTION OF THE DRAWINGS

In order to more clearly illustrate the technical solutions in the present disclosure or related art, the drawings required for use in the description of the embodiments or related art will be briefly introduced below. Clearly, the drawings described below are merely embodiments of the present disclosure, and for those of ordinary skill in the art, other drawings may also be obtained based on these drawings without creative effort.
FIG. 1 is a structural diagram of a lithium-ion battery in an embodiment of the present disclosure.
FIG. 2 is an exploded structural diagram of a lid assembly in an embodiment of the present disclosure.
FIG. 3 is a partial cross-sectional diagram of the lid assembly and an electrode assembly in FIG. 2 in cooperation.
FIG. 4 is a structural diagram of another lid assembly and an electrode assembly in cooperation.

### DESCRIPTION OF THE EMBODIMENTS

To make the objectives, technical solutions and advantages of the present disclosure clearer, the present disclosure will be further described in detail below in conjunction with specific embodiments and with reference to the accompanying drawings.

It is to be understood that, unless otherwise defined, the technical or scientific terms used in the embodiments of the present disclosure shall have the ordinary meanings as understood by a person of ordinary skill in the art to which the present disclosure pertains. The terms "first," "second," and the like, as used in the embodiments of the present disclosure, do not denote any order, quantity, or importance, but are merely used to distinguish different components. The terms "include" or "comprise," and similar terms, indicate that the elements or objects preceding such terms encompass the elements or objects recited thereafter and their equivalents, and do not exclude the presence of other elements or objects. The terms "connected" or "coupled," and similar terms, are not limited to physical or mechanical connections, but may include electrical connections, whether direct or indirect. The terms "upper," "lower," "left," "right," and the like are used solely to indicate relative positional relationships; when the absolute position of the object being described changes, such relative positional relationships may correspondingly change.

A lithium-ion battery is a type of secondary battery that operates primarily through the migration of lithium ions between a positive electrode and a negative electrode. The operating principle of the lithium-ion battery is as follows: during charging, lithium ions are deintercalated from the positive electrode and, via the electrolyte, intercalated into the negative electrode, placing the negative electrode in a lithiated state; during discharging, the converse occurs, with lithium ions migrating from the negative electrode to the positive electrode, thereby releasing stored energy. The lithium-ion battery generally includes a housing and a lid assembly, with an electrode assembly disposed within the housing. The electrode assembly principally includes a main body and tabs connected thereto, and the lid assembly principally includes a rivet, a terminal, a lid base, an upper insulating member, and a lower insulating member, among other components.

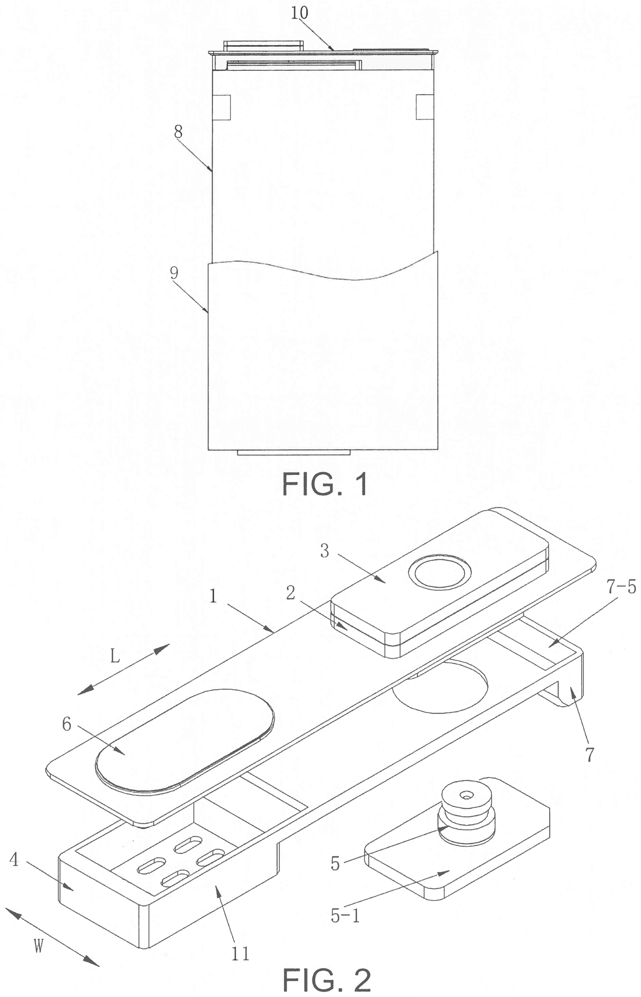

During implementation of the present disclosure, it has been observed that, in some lithium-ion batteries, the lid assembly causes compressive damage to the electrode assembly. Analysis of this issue indicates that such damage is attributable to a non-uniform distribution of pressure exerted by the lid assembly upon the electrode assembly, resulting in the lid assembly crushing the electrode assembly. Specifically, as shown in FIG. 1, which is a structural diagram of a dual-through cell, a dual-through cell is a battery in which positive tabs and negative tabs extend from opposite ends of an electrode assembly 8 respectively. Correspondingly, the positive tab is electrically connected to a positive electrode terminal of a positive electrode lid assembly located at an end of a housing 9, and the negative tab is electrically connected to a negative electrode terminal of a negative electrode lid assembly located at the other end of the housing 9. FIG. 2 shows a schematic diagram of a lid assembly 10 of the dual-through cell, such as the negative electrode lid assembly. A lower insulating member 4 is provided with a protruding portion at each end along a length direction L. The two protruding portions abut against a main body 8-1 of the electrode assembly 8 to support the electrode assembly 8. Due to different contact areas on both sides, stress concentration may occur on a side with a smaller contact area, especially under impact, vibration and other working conditions, which may cause the electrode assembly 8 to be easily crushed. Therefore, for such small-sized cells (for example, dual-through cells or top-out cells with a lid assembly having a length less than 150mm), there is an urgent need for a lithium-ion battery that avoids compressive damages.

It may be contemplated to increase a contact area between the protruding portion on the relatively narrower side of the lid assembly 10 and the electrode assembly 8, so as to reduce a contact surface pressure and avoid compressive damage to the electrode assembly 8. However, because the protruding portion and a terminal base plate 5-1 are arranged with a gap, for the lid assembly 10 of a relatively small dimension (for example, where a length of the lid assembly 10 is less than 150mm and a width is less than 3mm), a short length of the lid assembly 10 constrains the dimensional design of the protruding portion. If the contact surface between the protruding portion and the main body 8-1 is merely extended in a planar manner, the achievable increase in size is limited, space utilization is low, and the improvement is insufficient. Following further research and development, embodiments of the present disclosure provide for adding a curved-surface region 7-2 to the protruding portion, whereby, within the same spatial envelope, a contact area between the protruding portion and the electrode assembly 8 is increased, thereby protecting the electrode assembly 8.

Hereinafter, the technical solution of the present disclosure will be further described in detail through specific embodiments in conjunction with FIG. 1 to FIG. 4.

In some embodiments of the present disclosure, the lid assembly 10 is provided, including: a lid base 1, the lower insulating member 4 stacked with the lid base 1, a terminal 5 and an explosion protection valve 6 disposed on the lid base 1. The terminal 5 sequentially penetrates through the lower insulating member 4 and the lid base 1. A terminal base plate 5-1 is provided on a side of the terminal 5 away from the lid base 1. A first protruding portion 11 and a second protruding portion 7 are provided on a side of the lower insulating member 4 away from the lid base 1. The first protruding portion 11 corresponds to a position of the explosion protection valve 6. The second protruding portion 7 is located at an end of the lower insulating member 4 away from the first protruding portion 11. A surface of the second protruding portion 7 away from the lid base 1 includes a planar region 7-1 and a curved region 7-2 connected to each other. The curved region 7-2 is disposed close to the terminal base plate 5-1. An orthogonal projection of the curved region 7-2 on the lid base 1 is a first projection. A minimum dimension of the first projection in a length direction of the lid assembly 10 is L1. A minimum distance between the planar region 7-1 and the terminal base plate 5-1 is L0, which satisfies 0.5≤L1/L0≤0.9.

As shown in FIG. 2, which is an exploded structural diagram of the lid assembly 10, where the direction L is the length direction of the lid assembly 10, and a direction W is a width direction of the lid assembly 10. The lid assembly 10 includes the lid base 1, and the lid base 1 is, for example, an aluminum plate, which is not specifically limited. The lid assembly 10 includes a terminal 5 penetrating through the lid base 1, and the terminal 5 is, for example, a positive electrode terminal or a negative electrode terminal. An end of the terminal 5 is located on a side of the lid base 1 facing the electrode assembly 8, where the terminal base plate 5-1 is provided for electrical connection with a tab 8-2 of the electrode assembly 8. The other end of the terminal 5 is located on a side of the lid base 1 away from the electrode assembly 8, for electrical connection with external circuits. An upper insulating member 2 is provided on a side of the lid base 1 away from the electrode assembly 8, and the lower insulating member 4 is provided on a side close to the electrode assembly 8. The insulating member is, for example, a plastic part, ensuring insulation between the lid base 1 and the terminal 5. A riveting member 3 is provided on a side of the upper insulating member 2 away from the electrode assembly 8, and the riveting member 3 is, for example, a conductive block, which may be electrically connected to external circuits. The terminal 5 sequentially penetrates through the lower insulating member 4, the lid base 1 and the upper insulating member 2, and is riveted and fixed with the riveting member 3. Those skilled in the art should know that this embodiment illustratively uses a riveted terminal as an example for description, and in other embodiments of the present disclosure, an injection-molded terminal may be used as an example.

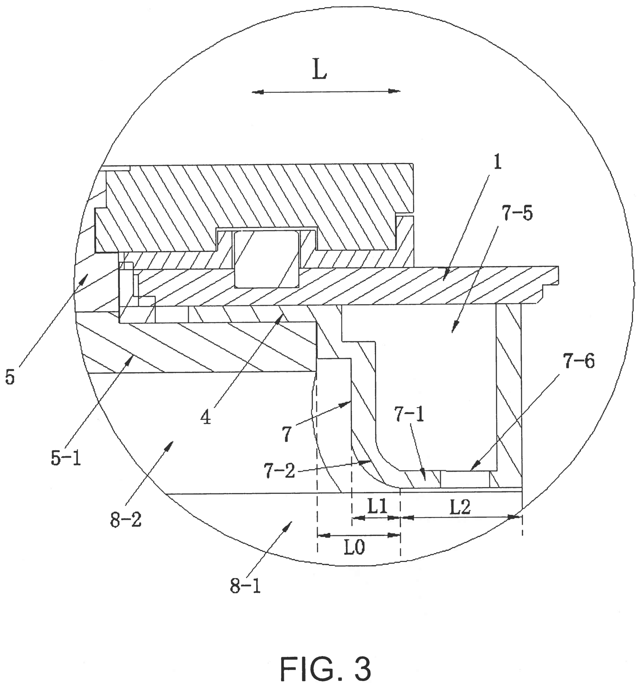

As shown in FIG. 3, FIG. 3 is a partial cross-sectional diagram of the lid assembly 10 cooperating with the electrode assembly 8 in FIG. 2. The electrode assembly 8 includes the main body 8-1 and the tab 8-2 connected to each other. A side of the lower insulating member 4 close to the electrode assembly 8 is provided with the first protruding portion 11 and the second protruding portion 7. The protruding portions are, for example, rectangular structures, which are not specifically limited. The protruding portions abut against the main body 8-1 for support, and may also cooperate with the housing 9. The explosion protection valve 6 is provided on the lid base 1. In the event of battery thermal runaway, high-temperature gases may be discharged from the housing 9 through the explosion protection valve 6, thus avoiding an explosion. The first protruding portion 11 corresponds to the position of the explosion protection valve 6. The second protruding portion 7 is located at an end of the lower insulating member 4 away from the first protruding portion 11, and a length of the first protruding portion 11 is greater than a length of the second protruding portion 7.

A side of the second protruding portion 7 close to the electrode assembly 8 includes the planar region 7-1 and the curved region 7-2 connected to each other. The curved region 7-2 is set close to the terminal base plate 5-1. A cross-sectional shape of the curved region 7-2 is, for example, a downward convex arc, which is not specifically limited. The planar region 7-1 directly abuts against the main body 8-1, and the curved region 7-2 may abut against the main body 8-1 or the tab 8-2 when the electrode assembly 8 is compressed. By providing the planar region 7-1 and the curved region 7-2 on the second protruding portion 7, a contact area between the second protruding portion 7 and the electrode assembly 8 is increased, which may reduce the pressure on the contact surface, especially under conditions such as impact and vibration of the battery, thus avoiding crushing the electrode assembly 8. With the same space, the curved region 7-2 has a larger contact area compared to a planar design, and is more compatible with a root of the tab 8-2, with a higher space utilization efficiency, while improving the crushing phenomenon, the battery energy density may be improved as well.

As shown in FIG. 3, an orthogonal projection of the curved region 7-2 on the lid base 1 is a first projection. The minimum dimension of the first projection in the length direction of the lid assembly 10 is L1. The minimum distance between the planar region 7-1 and the terminal base plate 5-1 is L0, which satisfies 0.5≤L1/L0≤0.9, for example, L1/LO is 0.5, 0.6, 0.7, 0.8, or 0.9, etc., which is not specifically limited. By limiting the proportional relationship of L1/L0, battery stability is ensured, avoiding the first projection occupying an excessive proportion, a spacing between the second protruding portion 7 and the tab 8-2 being too close, and being subject to spatial interference. Also, it is possible to avoid the first projection occupying an insufficient proportion, the contact area between the second protruding portion 7 and the electrode assembly 8 being small, and still the electrode assembly might be easily crushed.

The lid assembly 10 is simple in structure and convenient to manufacture, and is capable of effectively preventing compressive damage to the electrode assembly 8, thereby ensuring the stability of the battery.

The lid assembly 10 has a simple structure and is convenient to make, may effectively avoid the crushing phenomenon of the electrode assembly 8, and ensure battery stability.

In some embodiments, the dimension of the first projection along the length direction of the lid assembly 10 is 0.1mm to 2mm.

As shown in FIG. 3, the length L1 of the first projection of the curved region 7-2 is 0.1mm to 2mm, for example, L1 is 0.1mm, 0.3mm, 0.5mm, 0.7mm, 1mm, 1.5mm, or 2mm, etc., which is not specifically limited, and may ensure battery stability. The connection between the tab 8-2 and the main body 8-1 normally forms a chamfer, or the tab 8-2 may have misalignment during manufacturing causing increased dimensions. If the length of the first projection is excessive, the spacing between the curved region 7-2 and the tab 8-2 becomes unduly small and is subject to spatial interference. Moreover, the excessively long curved region 7-2 will substantially reduce the contact area of direct contact between the planar region 7-1 and the main body 8-1, thereby degrading battery stability. Conversely, if the length of the first projection is too short, the contact area between the second protruding portion 7 and the electrode assembly 8 is reduced, rendering the electrode assembly 8 susceptible to compressive damage. A length L2 of the planar region 7-1 may be from 4mm to 10mm, such as 4mm, 5mm, 6mm, 7mm, 8mm, 9mm, or 10mm, without limitation. If the length of the planar region 7-1 is excessive, the arrangement of the tab 8-2 will be affected; if the length of the planar region 7-1 is too short, compressive damage will occur to the electrode assembly 8.

In some embodiments, a length of the lower insulating member 4 is 116mm, a length of the first protruding portion 11 is 55mm, a length of the planar region 7-1 of the second protruding portion 7 is 4mm, and the length of the first projection is 1.5mm.

In some embodiments, a length of the lid assembly 10 is 50mm to 150mm, and a minimum spacing between the second protruding portion 7 and the terminal base plate 5-1 is greater than 0mm and less than or equal to 10mm.

The length of the lid assembly 10 is, for example, 50mm, 70mm, 100mm, 120mm, or 150mm, etc., which is not specifically limited, so as to ensure the energy density of the battery. The minimum spacing between the second protruding portion 7 and the terminal base plate 5-1 is greater than 0mm and less than or equal to 10mm, for example, the spacing is 1mm, 3mm, 5mm, 7mm, or 10mm, etc., which is not specifically limited, and may improve space utilization.

In some embodiments, a partial region of the second protruding portion 7 on a side close to the terminal base plate 5-1 extends toward the terminal base plate 5-1 to form a cantilever 7-3, and the cantilever 7-3 forms the curved region 7-2 on a side away from the lid base 1.

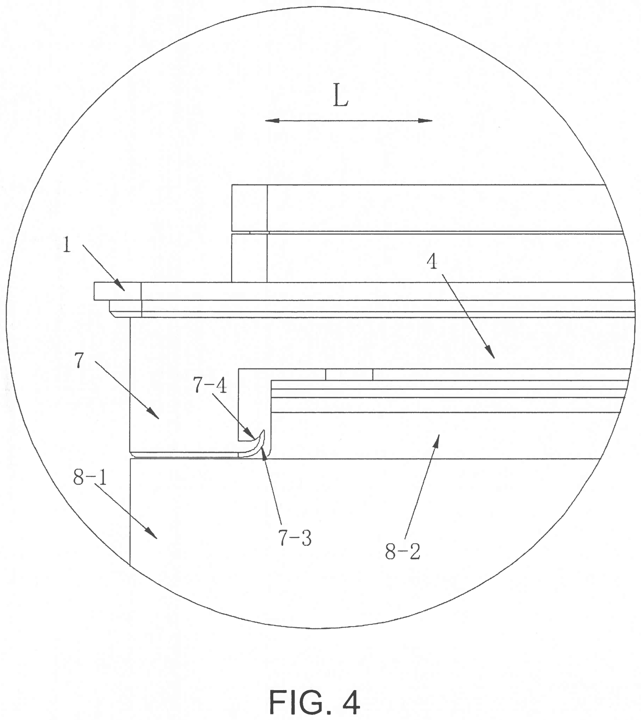

As shown in FIG. 4, FIG. 4 is a structural diagram of another lid assembly 10 cooperating with the electrode assembly 8. In the figure, the bottom of the second protruding portion 7 on a side close to the terminal base plate 5-1 extends toward the terminal base plate 5-1 to form the cantilever 7-3. The cantilever 7-3 may be integrally molded with the second protruding portion 7. A surface of the cantilever 7-3 on a side away from the lid base 1 is designed with a transition, that is, forming the aforementioned curved region 7-2. By providing the cantilever 7-3, not only is the contact area between the second protruding portion 7 and the electrode assembly 8 increased, but a buffering effect is also enhanced. Because the cantilever 7-3 has a relatively thin dimension and the structure has a degree of flexibility, when the battery is under impact, vibration and other working conditions, the cantilever 7-3 is easily deformed when subjected to compression, absorbing the impact force of the electrode assembly 8, serving a buffering function, and further avoiding crushing the electrode assembly 8.

In some embodiments, a thickness of the cantilever 7-3 is 0.1mm to 1mm.

At a connection between the cantilever 7-3 and the second protruding portion 7, the thickness of the cantilever 7-3 is, for example, 0.1mm, 0.3mm, 0.5mm, 0.7mm, or 1mm, etc., which is not specifically limited, and is preferably 0.7mm, so as to ensure the structural stability of the cantilever 7-3. Such design avoids the cantilever 7-3 being too thick, which would result in poor flexibility and reduced buffering effect on the electrode assembly 8. Such design also avoids the cantilever 7-3 being too thin, which would result in a poor connection strength and easy fracture of the cantilever 7-3.

In some embodiments, the cantilever 7-3 is provided with a transition portion 7-4 on a side close to the lid base 1.

As shown in FIG. 4, the transition portion 7-4 is provided on a side of the cantilever 7-3 close to the lid base 1. The transition portion 7-4 is set close to the tab 8-2, and the transition portion 7-4 is, for example, a chamfer or a fillet, and the like to facilitate deformation of the cantilever 7-3 when being compressed.

In some embodiments, both the transition portion 7-4 and the curved region 7-2 are fillets. A fillet radius of the curved region 7-2 is 0.7mm to 2mm, and a fillet radius of the transition portion 7-4 is equal to the fillet radius of the curved region 7-2 minus the thickness of the cantilever 7-3.

Both the transition portion 7-4 and the curved region 7-2 may be set as fillets, the fillet radius of the curved region 7-2 is, for example, 0.7mm, 1mm, 1.5mm, or 2mm, etc., and the fillet radius of the transition portion 7-4 is, for example, 0.6mm, 0.8mm, or 1mm, etc. The foregoing is provided by way of example and is not intended to be limiting, and is selected to facilitate manufacture and satisfy deformation requirements.

In some embodiments, the second protruding portion 7 is provided with a cantilever 7-3, and along the width direction of the lid assembly 10, a dimension of the cantilever 7-3 is less than or equal to a dimension of the second protruding portion 7.

The second protruding portion 7 may be provided with only one cantilever 7-3 on a side close to the tab 8-2. The cantilever 7-3 extends along the width direction of the lid assembly 10, which may effectively increase the contact area between the second protruding portion 7 and the electrode assembly 8, with a simple structure and is convenient for manufacturing. Along the width direction of the lid assembly 10, the dimension of the cantilever 7-3 is less than or equal to the dimension of the second protruding portion 7, thereby avoiding interference with battery assembly.

In some embodiments, the second protruding portion 7 is connected with multiple cantilevers 7-3, and the multiple cantilevers 7-3 are spaced apart along the width direction of the lid base 1.

The second protruding portion 7 may be connected with the multiple cantilevers 7-3 spaced apart on a side close to the tab 8-2, for example, two, three, or four cantilevers may be provided, etc., which is not specifically limited. Since the cantilevers 7-3 are spaced apart, the dimension of a single cantilever 7-3 is narrow, making the cantilever 7-3 easier to deform when being compressed, thereby further enhancing the buffering effect of the cantilevers 7-3 and avoiding crushing the electrode assembly 8.

In some embodiments, the second protruding portion 7 is provided with an opening slot 7-5 on a side close to the lid base 1, and a slot bottom of the opening slot 7-5 away from the lid base 1 is provided with a through hole 7-6.

As shown in FIG. 3, the second protruding portion 7 is a hollow structure, internally provided with the opening slot 7-5, and the slot bottom is provided with the through hole 7-6 to facilitate an electrolyte flow and avoiding affecting a wetting effect of the electrode assembly 8.

In some embodiments, the through hole 7-6 is spaced apart from the curved region 7-2.

As shown in FIG. 3, the through hole 7-6 is spaced apart from the curved region 7-2, thus facilitating manufacturing and avoiding affecting the contact area of the curved region 7-2.

In some embodiments of the present disclosure, a lithium-ion battery is provided, including: the housing 9; the lid assembly 10 described in any of the above embodiments, wherein the lid assembly 10 seals the housing 9; the electrode assembly 8 disposed within the housing 9, wherein the electrode assembly 8 includes the main body 8-1 and the tab 8-2 extending from the main body 8-1, the tab 8-2 is connected to the terminal base plate 5-1, the minimum distance between the tab 8-2 and the second protruding portion 7 is greater than or equal to 1mm and less than or equal to 3mm.

As shown in FIG. 1, FIG. 1 is a structural diagram of a lithium-ion battery. The lithium-ion battery includes the housing 9, the electrode assembly 8, and the lid assembly 10. The housing 9 is, for example, an aluminum housing, and may be welded to the lid assembly 10.

The minimum spacing between the second protruding portion 7 and the tab 8-2 is greater than or equal to 1mm and less than or equal to 3mm, for example, the spacing may be 1mm, 2mm, or 3mm, etc., without specific limitation, thereby ensuring the energy density of the battery while avoiding affecting battery assembly.

The lithium-ion battery described herein is applicable to electrical equipment, which may include, without limitation, vehicles, mobile phones, portable devices, laptop computers, ships and marine vessels, aerospace craft and vehicles, electric toys, and power tools. The vehicles may be petroleum-fueled automobiles, gas-fueled automobiles, or new energy vehicles (NEVs), the latter including, by way of example, battery electric vehicles, hybrid electric vehicles, and range-extended electric vehicles. Aerospace craft and vehicles include, without limitation, airplanes, rockets, space shuttles, and spacecraft. Electric toys include stationary or mobile electric toys, such as game consoles, electric toy cars, electric toy ships, and electric toy airplanes. Power tools include, by way of example and without limitation, metal-cutting power tools, grinding power tools, assembly power tools, and railway power tools, such as electric drills, electric grinders, electric wrenches, electric screwdrivers, rotary hammers, impact drills, concrete vibrators, and electric planers.

## Claims

1. A lid assembly (10), comprising a lid base (1), a lower insulating member (4) stacked with the lid base (1), and a terminal (5) and an explosion protection valve (6) disposed on the lid base (1);
wherein the terminal (5) penetrates the lower insulating member (4) and the lid base (1) in sequence, a terminal base plate (5-1) is provided on a side of the terminal (5) away from the lid base (1), a first protruding portion (11) and a second protruding portion (7) are provided on a side of the lower insulating member (4) away from the lid base (1), the first protruding portion (11) corresponds to a position of the explosion protection valve (6), the second protruding portion (7) is located at an end of the lower insulating member (4) away from the first protruding portion (11), a surface of the second protruding portion (7) away from the lid base (1) comprises a planar region (7-1) and a curved region (7-2) connected to each other, the curved region (7-2) is disposed close to the terminal base plate (5-1), an orthogonal projection of the curved region (7-2) on the lid base (1) is a first projection, a minimum dimension of the first projection in a length direction of the lid assembly (10) is L1, a minimum distance between the planar region (7-1) and the terminal base plate (5-1) is L0, which satisfies 0.5≤L1/L0≤0.9.

2. The lid assembly (10) according to claim 1, wherein a dimension of the first projection along the length direction of the lid assembly (10) is 0.1mm to 2mm.

3. The lid assembly (10) according to claim 2, wherein a length of the lid assembly (10) is 50mm to 150mm, a minimum spacing between the second protruding portion (7) and the terminal base plate (5-1) is greater than 0mm and less than or equal to 10mm.

4. The lid assembly (10) according to claim 1, wherein a partial region of the second protruding portion (7) on a side close to the terminal base plate (5-1) extends toward the terminal base plate (5-1) to form a cantilever (7-3), and the curved region (7-2) is formed on a side of the cantilever (7-3) away from the lid base (1).

5. The lid assembly (10) according to claim 4, wherein a thickness of the cantilever (7-3) is 0.1mm to 1mm.

6. The lid assembly (10) according to claim 4, wherein a transition portion (7-4) is provided on a side of the cantilever (7-3) close to the lid base (1).

7. The lid assembly (10) according to claim 6, wherein the transition portion (7-4) and the curved region (7-2) are both fillets, a fillet radius of the curved region (7-2) is 0.7mm to 2mm, a fillet radius of the transition portion (7-4) is equal to the fillet radius of the curved region (7-2) minus a thickness of the cantilever (7-3).

8. The lid assembly (10) according to claim 4, wherein the second protruding portion (7) is provided with one said cantilever (7-3), and along a width direction of the lid assembly (10), a dimension of the cantilever (7-3) is less than or equal to a dimension of the second protruding portion (7).

9. The lid assembly (10) according to claim 4, wherein the second protruding portion (7) is connected with a plurality of the cantilevers (7-3), and the plurality of cantilevers (7-3) are spaced apart along a width direction of the lid base (1).

10. The lid assembly (10) according to claim 1, wherein an opening slot (7-5) is provided on a side of the second protruding portion (7) close to the lid base (1), and a through hole (7-6) is provided at a slot bottom of the opening slot (7-5) away from the lid base (1).

11. The lid assembly (10) according to claim 10, wherein the through hole (7-6) is spaced apart from the curved region (7-2).

12. A lithium-ion battery, comprising:
a housing (9);
the lid assembly (10) according to any one of claims 1-11, wherein the lid assembly (10) seals the housing (9); and
an electrode assembly (8), disposed in the housing (9), wherein the electrode assembly (8) comprises a main body (8-1) and a tab (8-2) extending from the main body (8-1), the tab (8-2) is connected to the terminal base plate (5-1), and a minimum distance between the tab (8-2) and the second protruding portion (7) is greater than or equal to 1mm and less than or equal to 3mm.
